(19) **Europäisches Patentamt / European Patent Office / Office européen des brevets**

(11) **EP 1 845 653 A1**

(12) **EUROPEAN PATENT APPLICATION**

(43) Date of publication:
**17.10.2007 Bulletin 2007/42**

(51) Int Cl.:
*H04L 9/08* (2006.01)    *G06K 19/07* (2006.01)
*G07F 7/10* (2006.01)

(21) Application number: **07007447.1**

(22) Date of filing: **11.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **12.04.2006 JP 2006109813**

(71) Applicant: **Sony Corporation**
**Minato-ku**
**Tokyo 108-0075 (JP)**

(72) Inventor: **Hamada, Hiroaki**
**Tokyo, 108-0075 (JP)**

(74) Representative: **Müller - Hoffmann & Partner**
**Patentanwälte,**
**Innere Wiener Strasse 17**
**81667 München (DE)**

(54) **System, device, method, and program for communication**

(57)     A communication device (11) performing wireless communication with another communication device (12) includes a private value generating unit, a calculating unit, and an encryption key generating unit (22). The private value generating unit generates a first private value to be kept secret from outside parties. The calculating unit performs a predetermined calculation using the first private value and two known preset values to determine a first public value to be transmitted to the other communication device. The encryption key generating unit performs the predetermined calculation using the first private value, a second public value transmitted from the other communication device, and one of the two preset values to generate an encryption key used in encrypted communication with the other communication device. The second public value is determined by performing the predetermined calculation using a second private value to be kept secret from outside parties and the two preset values.

FIG. 2

EP 1 845 653 A1

**Description**

CROSS REFERENCES TO RELATED APPLICATIONS

The present application contains subject matter related to Japanese Patent Application JP 2006-109813 filed in the Japanese Patent Office on April 12, 2006, the entire contents of which are incorporated herein by reference.

BACKGROUND OF THE INVENTION

1. Field of the Invention

The present invention relates to systems, devices, methods, and programs for communication. In particular, the present invention relates to a system, a device, a method, and a program for communication that performs transmission of information in a secure manner in a wireless communication system constituted by, for example, an integrated circuit (IC) card and a PIN (personal identification number) entry device.

2. Description of the Related Art

IC cards have to be configured to permit only preregistered authorized users to use the IC cards and inhibit users (third parties) other than the authorized users from using the IC cards. To prevent unauthorized use of the IC cards by the third parties, the IC cards request users to input personal identifiers (PIDs), such as a personal identification number (PIN) (also referred to as a secret number). The IC cards give permission of use to users only when the PIDs input in response to the request are confirmed (authenticated) to be PIDs of authorized users.

If a user inputs a PIN to a PIN entry device (PED) by operating a numeric keypad or a keyboard of the PED, for example, the input PIN is transmitted from the PED to an IC card through, for example, a reader/writer included in the PED. The transmitted PIN is verified with a PIN stored in the IC card. If the PIN leaks to malicious third parties during the transmission from the PED to the IC card, the third parties may possibly use the IC card illegally using the leaked PIN. To prevent such a circumstance, it is necessary to protect the PIN transmitted from the PED to the IC card from third parties.

Hitherto, a method for transmitting a PIN as plaintext while physically protecting a transmission path between a PED and an IC card from attacks of third parties, such as eavesdropping, and a method for transmitting an encrypted PIN from a PED to an IC card after encrypting the PIN in the PED and decrypting the encrypted PIN into the PIN in the IC card (for example, see Japanese Examined Patent Application Publication No. 7-75033) are known as methods for protecting the PIN transmitted from the PED to the IC card.

SUMMARY OF THE INVENTION

A method for transmitting a PIN as plaintext while physically protecting a transmission path between a PED and an IC card from eavesdropping or the like is realized by means of so-called contact IC cards. The contact IC cards employ a system for transmitting data from a PED to the IC cards electrically while IC cards is in contact with an IC card reader/writer electrically.

However, in so-called contactless IC cards, namely, IC cards employing a system for transmitting data from a PED to IC cards by wireless in which the IC cards and an IC card reader/writer are not in electrical contact, intercepting radio signals (electromagnetic waves) at a remote place is theoretically possible. Thus, physically protecting a transmission path between a PED and an IC card is difficult.

In addition, in a method for transmitting an encrypted PIN to an IC card from a PED after encrypting the PIN in the PED and decrypting the encrypted PIN into the PIN in the IC card, a common encryption key used for encryption in the PED and decryption in the IC card has to be prestored in the PED and the IC card. Accordingly, it is difficult to adopt this method in applications except for limited applications in consideration of security risks.

More specifically, in general-purpose applications that assume PEDs operated by various vendors and IC cards issued by various issuers, there is a serious security risk that information may leak from security-vulnerable apparatuses due to attacks of third parties at the time of distribution and storage of encryption keys. Accordingly, in general-purpose applications, it is not preferable to adopt a method for storing a common encryption key in a PED and an IC card, transmitting an encrypted PIN to the IC card from the PED after encrypting the PIN in the PED, and decrypting the encrypted PIN into the PIN in the IC card.

The present invention is made in view of such circumstances. The present invention avoids threats of eavesdropping caused by transmitting plaintext by wireless and security risks caused by sharing of encryption keys, and enables transmission of information, such as a PID, to be performed in a secure manner.

A communication system according to a first aspect of the present invention includes a first communication device configured to perform wireless communication, and a second communication device configured to perform wireless communication. The first communication device includes first private value generating means configured to generate a first private value to be kept secret from outside parties, first calculating means configured to perform a predetermined calculation using the first private value and two known preset values to determine a first public value to be transmitted to the second communication device, and first encryption key generating means configured to perform the predetermined calculation using the first private value, a second public value transmitted from the second communication device, and one of the two preset values to generate an encryption key for use in encrypted communication with the second communication device. The second communication device includes second private value generating means configured to generate a second private value to be kept secret from outside parties, second calculating means configured to perform the predetermined calculation using the second private value and the two preset values to determine the second public value to be transmitted to the first communication device, and second encryption key generating means configured to perform the predetermined calculation using the second private value, the first public value transmitted from the first communication device, and the one of the preset values to generate the encryption key for use in encrypted communication with the first communication device.

A communication device according to a second aspect of the present invention is configured to perform wireless communication with another communication device. The communication device includes private value generating means configured to generate a first private value to be kept private from outside parties, calculating means configured to perform a predetermined calculation using the first private value and two known preset values to determine a first public value to be transmitted to the other communication device, encryption key generating means configured to perform the predetermined calculation using the first private value, a second public value transmitted from the other communication device, and one of the two preset values to generate an encryption key for use in encrypted communication with the other communication device. The second public value is determined by performing the predetermined calculation using a second private value to be kept secret from outside parties and the two preset values.

The communication device according to the second aspect of the present invention may further include PID storage means for storing a personal identifier, decrypting means configured to decrypt an encrypted personal identifier transmitted from the other communication device using the encryption key, the encrypted personal identifier being obtained by encrypting a personal identifier input by a user, and determination means configured to determine whether the personal identifier stored in the storage means and the personal identifier decrypted by the decrypting means agree. The communication device may continue the communication with the other communication device if the personal identifier stored in the storage means and the personal identifier decrypted by the decrypting means agree.

The communication device according to the second aspect of the present invention may further include operation means for being operated at the time of input of a personal identifier, and encrypting means configured to encrypt the personal identifier input through the operation of the operation means into an encrypted personal identifier using the encryption key. The communication device may transmit the encrypted personal identifier to the other communication device.

A communication method or a program according to a second aspect of the present invention is for a communication device configured to perform wireless communication with another communication device. The communication method or the program includes the steps of generating a first private value to be kept secret from outside parties, performing a predetermined calculation using the first private value and two known preset values to determine a first public value to be transmitted to the other communication device, and performing the predetermined calculation using the first private value, a second public value transmitted from the other communication device, and one of the two preset values to generate an encryption key for use in encrypted communication with the other communication device. The second public value is determined by performing the predetermined calculation using a second private value to be kept secret from outside parties and the two preset values.

In the first aspect of the present invention, the first communication device generates the first private value to be kept secret from outside parties, and performs the predetermined calculation using the first private value and the two known present values, thereby determining the first public value to be transmitted to the second communication device. The first communication device performs the predetermined calculation using the first private value, the second public value transmitted from the second communication device, and one of the two preset values, thereby generating the encryption key for use in the encrypted communication with the second communication device. The second communication device generates the second private value to be kept secret from the outside parties, and performs the predetermined calculation using the second private value and the two preset values, thereby determining the second public value to be transmitted to the first communication device. The second communication device performs the predetermined calculation using the second private value, the first public value transmitted from the first communication device, and the one of the preset values, thereby generating the encryption key for use in the encrypted communication with the first communication device.

In the second aspect of the present invention, the first private value to be kept secret from outside parties is generated. The predetermined calculation is performed using the first private value and the two known preset values, whereby the first public value to be transmitted to the other communication device is determined. The encryption key for use in the encrypted communication with the other communication device is generated by performing the predetermined calculation using the first private value, the second public value, and one of the two preset values. The second public value is transmitted from the other communication device and determined by performing the predetermined calculation using the second private value to be kept secret from the outside parties and the two preset values.

According to the first and second aspects of the present invention, transmission of information can be performed in a secure manner.

BRIEF DESCRIPTION OF THE DRAWINGS

Fig. 1 is a block diagram showing an example of a configuration of a communication system to which an embodiment of the present invention is applied;
Fig. 2 is a block diagram showing an example of functional configurations of a PED 11 and an IC card 12;
Fig. 3 is a block diagram showing an example of functional configurations of an encryption key generating section 22 and an encryption key generating section 32;
Fig. 4 is a flowchart illustrating an operation performed by a PED 11 and an operation performed by an IC card 12; and
Fig. 5 is a block diagram showing an example of a configuration of a personal computer to which an embodiment of the present invention is applied.

DESCRIPTION OF THE PREFERRED EMBODIMENTS

Before describing embodiments of the present invention, the correspondence between the features of the present invention and the specific elements disclosed in this specification and the accompanying drawings is discussed below. This description is intended to assure that embodiments supporting the claimed invention are described in this specification or the accompanying drawings. Thus, even if an element in the following embodiments is not described as relating to a certain feature of the present invention, that does not necessarily mean that the element does not relate to that feature of the claims. Conversely, even if an element is described herein as relating to a certain feature of the claims, that does not necessarily mean that the element does not relate to other features of the claims.

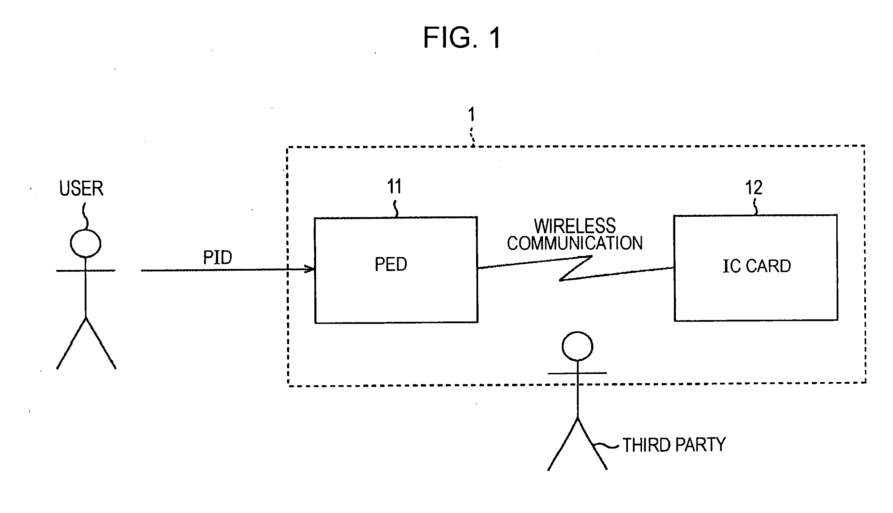

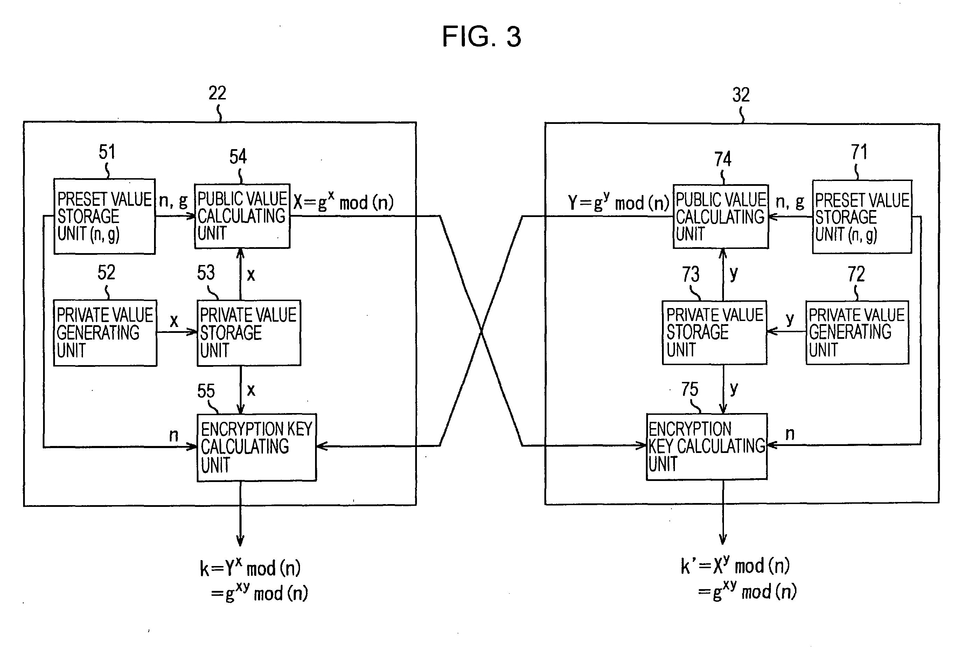

A communication system (for example, a wireless communication system 1 shown in Fig. 1) according to a first aspect of the present invention includes a first communication device configured to perform wireless communication, and a second communication device configured to perform wireless communication. The first communication device (for example, a PED 11 shown in Fig. 1) includes first private value generating means (for example, a private value generating unit 52 shown in Fig. 3) configured to generate a first private value to be kept secret from outside parties, first calculating means (for example, a public value calculating unit 54 shown in Fig. 3) configured to perform a predetermined calculation using the first private value and two known preset values to determine a first public value to be transmitted to the second communication device, and first encryption key generating means (an encryption key calculating unit 55 shown in Fig. 3) configured to perform the predetermined calculation using the first private value, a second public value transmitted from the second communication device, and one of the two preset values to generate an encryption key for use in encrypted communication with the second communication device. The second communication device (for example, an IC card 12 shown in Fig. 1) includes second private value generating means (for example, a private value generating unit 72 shown in Fig. 3) configured to generate a second private value to be kept secret from outside parties, second calculating means (for example, a public value calculating unit 74 shown in Fig. 3) configured to perform the predetermined calculation using the second private value and the two preset values to determine the second public value to be transmitted to the first communication device, and second encryption key generating means (for example, an encryption key calculating unit 75 shown in Fig. 3) configured to perform the predetermined calculation using the second private value, the first public value transmitted from the first communication device, and the one of the preset values to generate the encryption key for use in encrypted communication with the first communication device.

A communication device (for example, a PED 11 or an IC card 12 shown in Fig. 1) according to a second aspect of the present invention is configured to perform wireless communication with another communication device (for example, the IC card 12 or the PED 11 shown in Fig. 1). The communication device includes private value generating means (for example, a private value generating unit 52 shown in Fig. 3) configured to generate a first private value to be kept secret from outside parties, calculating means (for example, a public value calculating unit 54 shown in Fig. 3) configured to perform a predetermined calculation using the first private value and two known preset values to determine a first public value to be transmitted to the other communication device, encryption key generating means (for example, an encryption key calculating unit 55 shown in Fig. 3) configured to perform the predetermined calculation using the first private value,

4

a second public value transmitted from the other communication device, and one of the two preset values to generate an encryption key for use in encrypted communication with the other communication device. The second public value is determined by performing the predetermined calculation using a second private value to be kept secret from outside parties and the two preset values.

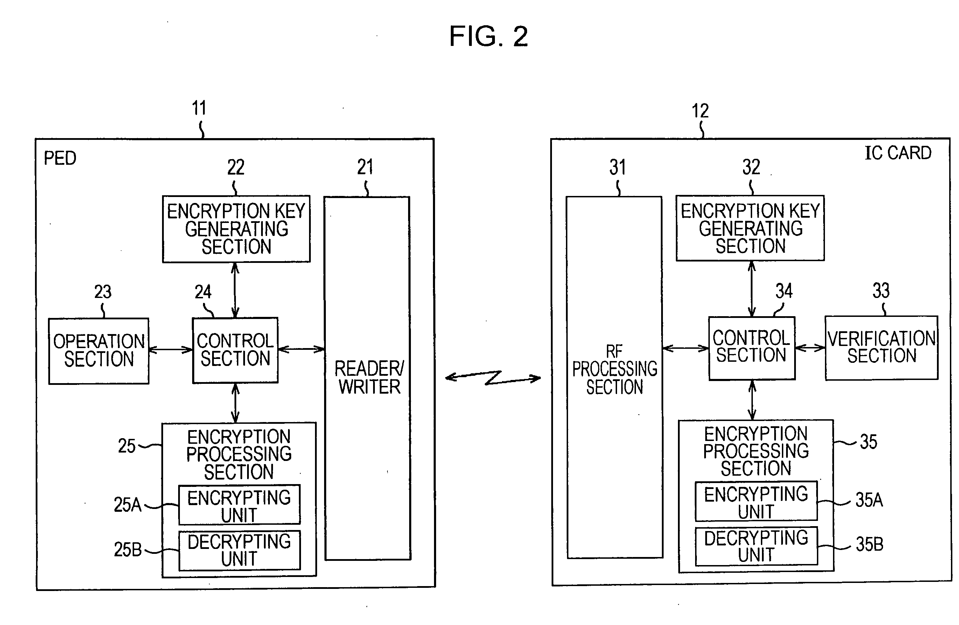

The communication device (for example, the IC card 12 shown in Fig. 1) according to the second aspect of the present invention may further include PID storage means (for example, a verification section 33 shown in Fig. 2) for storing a personal identifier, decrypting means (for example, a decrypting unit 35B shown in Fig. 2) configured to decrypt an encrypted personal identifier transmitted from the other communication device (for example, the PED 11 shown in Fig. 1) using the encryption key, the encrypted personal identifier being obtained by encrypting a personal identifier input by a user, and determination means (for example, the verification section 33 shown in Fig. 2) configured to determine whether the personal identifier stored in the storage means and the personal identifier decrypted by the decrypting means agree. The communication device may continue the communication with the other communication device if the personal identifier stored in the storage means and the personal identifier decrypted by the decrypting means agree.

The communication device (for example, the PED 11 shown in Fig. 1) according to the second aspect of the present invention may further include operation means (for example, an operation section 23 shown in Fig. 2) for being operated at the time of input of a personal identifier, and encrypting means (for example, an encrypting unit 25A shown in Fig. 2) configured to encrypt the personal identifier input through the operation of the operation means into an encrypted personal identifier using the encryption key. The communication device may transmit the encrypted personal identifier to the other communication device.

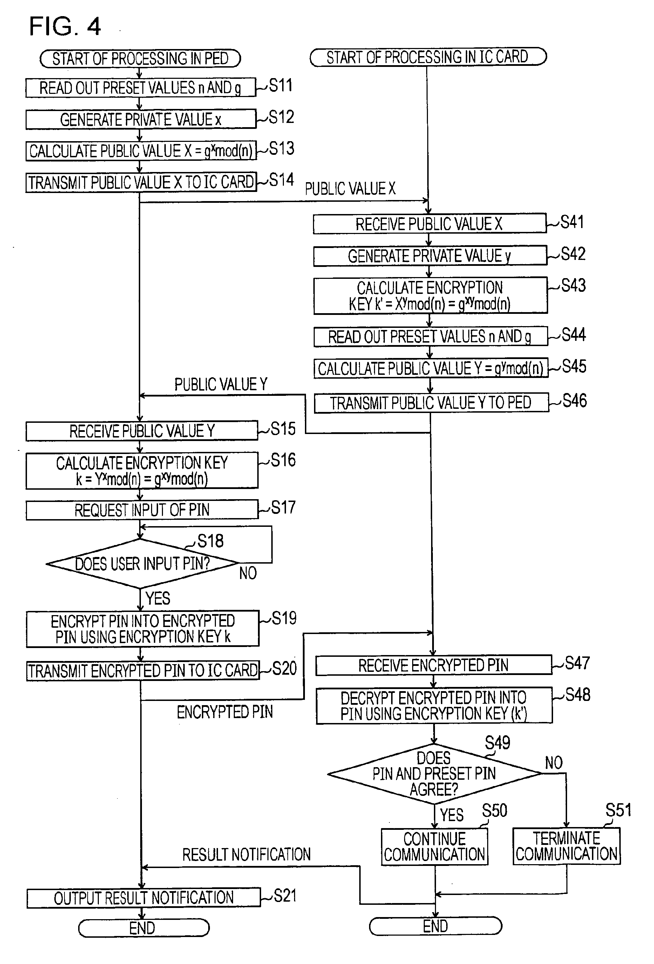

A communication method or a program according to a second aspect of the present invention is for a communication device configured to perform wireless communication with another communication device. The communication method or the program includes the steps of generating a first private value to be kept secret from outside parties (for example, STEP S12 shown in Fig. 4), performing a predetermined calculation using the first private value and two known preset values to determine a first public value to be transmitted to the other communication device (for example, STEP S13 shown in Fig. 4), and performing the predetermined calculation using the first private value, a second public value transmitted from the other communication device, and one of the two preset values to generate an encryption key for use in encrypted communication with the other communication device (for example, STEP S16 shown in Fig. 4). The second public value is determined by performing the predetermined calculation using a second private value to be kept secret from outside parties and the two preset values.

Embodiments of the present invention will be described below with reference to the drawings.

Fig. 1 is a block diagram showing an example of a configuration of a communication system to which an embodiment of the present invention is applied.

A wireless communication system 1 includes a PED (PIN entry device) 11 and an IC (integrated circuit) card 12. Wireless communication for transmitting and receiving data, such as a PIN (personal identification number), is performed between the PED 11 and the IC card 12 in a contactless manner using electromagnetic waves or infrared rays as media.

The PED 11 accepts input of a PIN from users and encrypts the PIN. Furthermore, the PED 11 transmits an encrypted PIN, obtained by encrypting the PIN, to the IC card 12.

The IC card 12 stores a PIN (hereinafter, referred to as a preset PIN accordingly) that is set at the time of issuance of the IC card 12, for example. The IC card 12 receives the encrypted PIN transmitted from the PED 11 and decrypts the encrypted PIN into a plaintext PIN. The IC card 12 verifies the PIN and the preset PIN stored in the IC card 12. The IC card 12 then permits users to use the IC card 12 only when the PIN obtained by decrypting the encrypted PIN, namely, the PIN input to the PED 11, and the preset PIN agree.

Fig. 2 is a block diagram showing an example of functional configurations of the PED 11 and the IC card 12 shown in Fig. 1.

Referring to Fig. 2, the PED 11 includes a reader/writer 21, an encryption key generating section 22, an operation section 23, a control section 24, and an encryption processing section 25. The IC card 12 includes an RF (radio frequency) processing section 31, an encryption key generating section 32, a verification section 33, a control section 34, and an encryption processing section 35.

In the PED 11, the reader/writer 21 transmits data or the like, which is supplied from the control section 24, to the IC card 12 by wireless. In addition, the reader/writer 21 receives data or the like transmitted from the IC card 12 and supplies the data or the like to the control section 24.

The encryption key generating section 22 exchanges various data with the encryption key generating section 32 through the control section 24, the reader/writer 21, and the RF processing section 31 and the control section 34 of the IC card 12, thereby generating an encryption key for use in encrypted communication according to a Diffie-Hellman key exchange algorithm described below. The encryption key generating section 22 then supplies the encryption key to the encryption processing section 25 through the control section 24.

The operation section 23 is operated by users. The operation section 23 supplies operation signals, corresponding to the operations, to the control section 24. The users can input, for example, a PIN by operating the operation section 23.

The control section 24 controls the reader/writer 21, the encryption key generating section 22, and the encryption processing section 25 constituting the PED 11.

In addition, the control section 24 issues commands to be given to the IC card 12 and transmits the commands to the IC card 12 through the reader/writer 21.

The encryption processing section 25 includes an encrypting unit 25A and a decrypting unit 25B. The encrypting unit 25A encrypts data, such as a PIN, supplied from the control section 24 using the encryption key supplied from the encryption key generating section 22 through the control section 24. The encrypting unit 25A supplies the encrypted data to the control section 24. The decrypting unit 25B decrypts encrypted data supplied from the IC card 12 through the control section 24 using the encryption key supplied from the encryption key generating section 22 through the control section 24. The decrypting unit 25B supplies the decrypted data to the control section 24.

In the IC card 12, the RF processing section 31 performs wireless communication with the reader/writer 21 in the PED 11, thereby transmitting data or the like supplied from the control section 34 to the PED 11 and receiving data or the like transmitted from the PED 11 and supplying the data to the control section 34.

Meanwhile, transmission of data or the like from the IC card 12 to the reader/writer 21 may be carried out by performing so-called load modulation, in the RF processing section 31, on electromagnetic waves or the like, i.e., carrier waves, output by the reader/writer 21. Alternatively, the RF processing section 31 may output carrier waves and modulate the carrier waves, thereby carrying out the transmission.

The encryption key generating section 32 exchanges various data with the encryption key generating section 22 through the control section 34, the RF processing section 31, and the reader/writer 21 and the control section 24 of the PED 11, thereby generating an encryption key for use in encrypted communication according to a Diffie-Hellman key exchange algorithm. The encryption key generating section 32 supplies the encryption key to the encryption processing section 35 through the control section 34.

The verification section 33 stores the preset PIN. Upon being supplied with a PIN through the control section 34, the verification section 33 performs PIN verification to determine whether the PIN supplied thereto through the control section 34 agrees with the preset PIN. The verification section 33 supplies a verification signal representing a result of the verification to the control section 34.

The control section 34 controls the RF processing section 31, the encryption key generating section 32, the verification section 33, and the encryption processing section 35 constituting the IC card 12. More specifically, the control section 34 supplies the encrypted data, transmitted from the PED 11 and supplied through the RF processing section 31, for example, to the encryption processing section 35. The control section 34 causes the encryption processing section 35 to decrypt the encrypted data. In addition, the control section 34 supplies the PIN transmitted from the PED 11, for example, to the verification section 33. The control section 34 causes the verification section 33 to perform the PIN verification.

The encryption processing section 35 includes an encrypting unit 35A and a decrypting unit 35B. The encrypting unit 35A encrypts the data, supplied from the control section 34, using the encryption key supplied thereto from the encryption key generating section 32 through the control section 34. The encrypting unit 35A then supplies the encrypted data to the control section 34. In addition, the decrypting unit 35B decrypts the encrypted data, such as a PIN, supplied from the PED 11 through the control section 34, using the encryption key supplied from the encryption key generating section 32 through the control section 34. The decrypting unit 35B then supplies the decrypted data to the control section 34.

Fig. 3 is a block diagram showing an example of functional configurations of the encryption key generating section 22 in the PED 11 and the encryption key generating section 32 in the IC card 12.

Exchange (generation) of encryption keys for use in encrypted communication is performed between the encryption key generating section 22 in the PED 11 and the encryption key generating section 32 in the IC card 12 using a Diffie-Hellman key exchange algorithm.

More specifically, in the PED 11, a preset value storage unit 51 in the encryption key generating section 22 stores two preset values n and g known among the PED 11 and the IC card 12 (the encryption key generating section 32 thereof). The preset values n and g are arbitrary prime numbers.

Here, as the preset value n becomes larger, decryption of the encryption key becomes more difficult. Accordingly, it is preferable to adopt as large a number as possible for the preset value n.

In addition, the preset values n and g do not have to be kept secret from outside parties.

A private value generating unit 52 generates, for example, a random number. The private value generating unit 52 generates a private value x, which is a value kept secret from outside parties including the IC card 12, on the basis of the random number, and supplies the private value x to a private value storage unit 53. Here, the private value x is a positive integer. Preferably, the private number x may be a large number.

The private value storage unit 53 stores the private value x supplied from the private value generating unit 52.

A public value calculating unit 54 reads out the preset values n and g from the preset value storage unit 51 and the private value x from the private value storage unit 53. The public value calculating unit 54 then performs a predetermined calculation expressed by equation (1), for example, using the preset values n and g and the private value x to calculate a public value X. The public value X is disclosed to the IC card 12 and does not have to be kept secret from outside parties. This public value X is transmitted from the public value calculating unit 54 to the IC card 12 through the control section 24 and the reader/writer 21.

$$X = g^x \bmod (n) \qquad \cdots (1)$$

Here, (A)mod(B) denotes a remainder resulting from dividing A by B.
An encryption key calculating unit 55 reads out one of the two preset values n and g, e.g., the preset value n, from the preset value storage unit 51 and the private value x from the private value storage unit 53. The encryption key calculating unit 55 then performs the same predetermined calculation as equation (1) expressed by equation (2) using the preset value n, the private value x, and a public value Y to calculate an encryption key k. The public value Y is transmitted from the IC card 12 and supplied to the encryption key calculating unit 55 through the reader/writer 21 and the control section 24. The encryption key k is supplied to the encryption processing section 25 through the control section 24.

$$k = Y^x \bmod (n) = g^{xy} \bmod (n) \qquad \cdots (2)$$

In the IC card 12, a preset value storage unit 71 in the encryption key generating section 32 stores the two preset values n and g that are the same as those stored in the preset value storage unit 51 in the encryption key generating section 22.
A private value generating unit 72, like the private value generating unit 52, for example, generates a random number. The private value generating unit 72 generates a private value y, which is a value kept secret from outside parties including the PED 11, on the basis of the random number and supplies the private value y to a private value storage unit 73.
Meanwhile, the private value y is a positive integer and is preferably a large number as in the case of the private value x.
In addition, the private value x generated by the private value generating unit 52 and the private value y generated by the private value generating unit 72 may be generated on the basis of the same method (algorithm) or on the basis of different methods (algorithms).
The private value storage unit 73 stores the private value y supplied from the private value generating unit 72.
A public value calculating unit 74 reads out the preset values n and g from the preset value storage unit 71 and the private value y from the private value storage unit 73. The public value calculating unit 74 performs the same predetermined calculation as equation (1) expressed by equation (3) using the preset values n and g and the private value y to generate a public value Y. The public value Y is disclosed to the PED 11 and does not have to be kept secret from outside parties. This public value Y is transmitted from the public value calculating unit 74 to the PED 11 through the control section 34 and the RF processing section 31.

$$Y = g^y \bmod (n) \qquad \cdots (3)$$

At this time, in the PED 11, the encryption key calculating unit 55 in the encryption key generating section 22 performs the predetermined calculation expressed by equation (2) using the public value Y transmitted from the IC card 12 in the above-described manner to determine the encryption key k.
An encryption key calculating unit 75 reads out one of the two preset values n and g, e.g., the preset value n, from the preset value storage unit 71 and the private value y from the private value storage unit 73. The encryption key calculating unit 75 then performs the same predetermined calculation as equation (1) expressed by equation (4) using the preset value n, the private value y, and the public value X to calculate an encryption key k'. The public value X is transmitted from the PED 11 and supplied to the encryption key calculating unit 75 through the RF processing section 31 and the control section 34. This encryption key k' is supplied to the encryption processing section 35 through the control section 34.

$$k' = X^y \bmod (n) = g^{xy} \bmod (n) \qquad \cdots (4)$$

The encryption key k determined by the encryption key calculating unit 55 using equation (2) and the encryption key k' determined by the encryption key calculating unit 75 using equation (4) are the same encryption key. Accordingly, the PED 11 and the IC card 12 can perform encrypted communication using the same encryption key.

Now, referring to a flowchart shown in Fig. 4, an operation performed by the PED 11 and an operation performed by the IC card 12 will be described.

It is assumed that the PED 11 and the IC card 12 store the common (same) preset values n and g in the preset value storage unit 51 of the PED 11 and the preset value storage unit 71 of the IC card 12 by, for example, mutually exchanging the preset values n and g beforehand.

In addition, it is assumed that the verification section 33 in the IC card 12 stores a PIN for an authorized user (Fig. 1) (i.e., the preset PIN) beforehand.

The reader/writer 21 in the PED 11 monitors (polls) the existence of the IC card 12 all the time. Upon detecting the existence of the IC card 12 within a communication-performable range of the PED 11, the PED 11 starts the operation.

More specifically, at STEP S11, the public value calculating unit 54 (Fig. 3) of the encryption key generating section 22 in the PED 11 reads out the preset values n and g from the preset value storage unit 51. The process then proceeds to STEP S12.

At STEP S12, the private value generating unit 52 (Fig. 3) of the encryption key generating section 22 in the PED 11 generates the private value x and stores the private value x in the private value storage unit 53. The process then proceeds to STEP S13.

At STEP S13, the public value calculating unit 54 (Fig. 3) of the encryption key generating section 22 in the PED 11 reads out the private value x from the private value storage unit 53. The public value calculating unit 54 then performs the predetermined calculation expressed by equation (1) using the read out preset values n and g and the private value x to calculate the public value X. The public value calculating unit 54 supplies the public value X to the control section 24 shown in Fig. 2. The process then proceeds to STEP S14.

At STEP S14, the control section 24 transmits the public value X, supplied from the public value calculating unit 54, to the IC card 12 through the reader/writer 21.

Upon receiving the public value X from the PED 11, the IC card 12 transmits the public value Y as described below. Thus, the control section 24 waits for the transmission of the public value Y from the IC card 12. The process then proceeds to STEP S15. The PED 11 receives the public value Y transmitted from the IC card 12 through the reader/writer 21 and supplies the public value Y to the encryption key generating section 22. The process then proceeds to STEP S16.

At STEP S16, the encryption key calculating unit 55 (Fig. 3) of the encryption key generating section 22 in the PED 11 reads out the preset value n from the preset value storage unit 51 and the private value x from the private value storage unit 53. The encryption key calculating unit 55 performs the predetermined calculation expressed by equation (2) using the public value Y supplied from the control section 24 and the read out preset value n and private value x to calculate the encryption key k. The encryption key calculating unit 55 supplies the encryption key k to the encryption processing section 25 through the control section 24. The process then proceeds to STEP S17.

Accordingly, the encryption processing section 25 in the PED 11 can perform encrypted communication with the IC card 12 using the encryption key k.

At STEP S17, the control section 24 requests a user to input a PIN by, for example, displaying a text saying "Please input a PIN" on an output section (not shown) to prompt the user to input the PIN. The process then proceeds to STEP S18.

At STEP S18, the control section 24 determines whether the user has input the PIN. If the PIN is determined not to be input by the user at STEP S18, STEP S18 is repeated.

If the PIN is determined to be input by the user at STEP S18, i.e., if the user operates the operation section 23 to input the PIN and an operation signal, corresponding to the PIN input by the user, is supplied from the operation section 23 to the control section 24, the process proceeds to STEP S19. The control section 24 supplies the PIN corresponding to the operation signal, supplied thereto from the operation section 23, to the encryption processing section 25. The encrypting unit 25A of the encryption processing section 25 encrypts the PIN supplied from the control section 24 and supplies the encrypted PIN to the control section 24. The process then proceeds to STEP S20.

At STEP S20, the control section 24 transmits, for example, a PIN verification request, including the encrypted PIN data supplied from the encryption processing section 25, to the IC card 12 through the reader/writer 21. At this time, upon receiving the PIN verification request from the PED 11, the IC card 12 performs PIN verification in a manner described below. The IC card 12 then transmits a notification of the verification result (hereinafter, referred to as a result notification accordingly) to the PED 11.

The control section 24 waits until the result notification is transmitted from the IC card 12. The process then proceeds to STEP S21. If the result notification transmitted from the IC card 12 indicates an agreement of the PINs, the PED 11 outputs a text saying "PINs agree" on an output section, not shown. On the other hand, if the result notification indicates a disagreement of the PINs, the PED 11 outputs a text saying "PINs disagree" on the output section. If the result notification indicates the agreement of the PINs, the PED 11 continues the communication with the IC card 12. However, the PED 11 performs encrypted communication with the IC card 12 using the encryption key k thereafter.

More specifically, data to be transmitted to the IC card 12 is encrypted by the encrypting unit 25A using the encryption key k and transmitted. In addition, data is encrypted and transmitted from the IC card 12. The transmitted encrypted data is decrypted by the decrypting unit 25B using the encryption key k.

On the other hand, in the IC card 12, if the PED 11 transmits the public value X, the control section 34 receives the public value X transmitted from the PED 11 through the RF processing section 31 at STEP S41. The control section 34 supplies the public value X to the encryption key calculating unit 75 (Fig. 3) of the encryption key generating section 32. The process then proceeds to STEP S42.

At STEP S42, the private value generating unit 72 (Fig. 3) of the encryption key generating section 32 generates the private value y and stores the private value y in the private value storage unit 73. The process then proceeds to STEP S43.

At STEP S43, the encryption key calculating unit 75 (Fig. 3) of the encryption key generating section 32 reads out the preset value n from the preset value storage unit 71 and the private value y from the private value storage unit 73. The encryption key calculating unit 75 performs the predetermined calculation expressed by equation (4) using the public value X supplied from the control section 34 and the read out preset value n and private value y to calculate the encryption key k'. The encryption key calculating unit 75 supplies the encryption key k' to the encryption processing section 35 through the control section 34. The process then proceeds to STEP S44.

Accordingly, the IC card 12 can perform encrypted communication with the PED 11 using the encryption key k'.

At STEP S44, the public value calculating unit 74 (Fig. 3) of the encryption key generating section 32 reads out the preset values n and g from the preset value storage unit 71. The process proceeds to STEP S45.

At STEP S45, the public value calculating unit 74 (Fig. 3) of the encryption key generating section 32 reads out the private value y from the private value storage unit 73. The public value calculating unit 74 then performs the predetermined calculation expressed by equation (3) using the read out preset values n and g and private value y to calculate the public value Y. The public value calculating unit 74 supplies the public value Y to the control section 34 shown in Fig. 2. The process then proceeds to STEP S46.

At STEP S46, the control section 34 transmits the public value Y, supplied from the public value calculating unit 74, to the PED 11 through the RF processing section 31. The process then proceeds to STEP S47.

At STEP S47, the control section 34 receives the PIN verification request transmitted from the PED 11 at STEP S20 through the RF processing section 31. The control section 34 extracts the encrypted PIN included in the PIN verification request and supplies the encrypted PIN to the encryption processing section 35. The process proceeds to STEP S48.

At STEP S48, the decrypting unit 35B of the encryption processing section 35 decrypts the encrypted PIN, supplied from the control section 34, using the encryption key k' determined at STEP S43. The decrypting unit 35B supplies the decrypted PIN to the verification section 33 through the control section 34. The process then proceeds to STEP S49.

At STEP S49, the verification section 33 performs verification to determine whether the PIN supplied from the control section 34 (i.e., the PIN input by the user) agrees with the preset PIN stored in the verification section 33.

If the PIN input by the user and the preset PIN are determined to agree at STEP S49, the process proceeds to STEP S50. The control section 34 transmits, for example, the result notification indicating the agreement of PINs to the PED 11 through the RF processing section 31 and continues the communication with the PED 11.

That is, if the PIN input by the user and the preset PIN agree, the user is authenticated (confirmed) as the authorized user. Accordingly, the IC card 12 permits the user to use the IC card 12, i.e., to perform encrypted communication with the PED 11. The user can utilizes predetermined functions provided by the IC card 12.

More specifically, in the IC card 12, data to be transmitted to the PED 11 is encrypted by the encrypting unit 35A using the encryption key k' and transmitted. In addition, encrypted data transmitted from the PED 11 is decrypted by the decrypting unit 35B using the encryption key k'.

On the other hand, if the PIN input by the user and the preset PIN are determined to disagree at STEP S49, the process proceeds to STEP S51. The control section 34 transmits, for example, the result notification indicating the disagreement of the PINs, to the PED 11 through the RF processing section 31. The control section 34 terminates the communication with the PED 11 and finishes the operation.

That is, if the PIN input by the user and the preset PIN disagree, the user is not authenticated (confirmed) as the authorized user. Thus, the IC card 12 does not permit the user to use the IC card 12. Accordingly, unauthorized use of the IC card 12 by the unauthorized user can be prevented.

According to the Diffie-Hellman key exchange algorithm, even if the public values X and Y and the preset values n and g, which do not have to be kept secret, are eavesdropped, calculating the encryption key k (= k' = $g^{xy}$mod(n))) in a short time is extremely difficult. Thus, even in a case where a third party (Fig. 1) eavesdrops on wireless communication between the PED 11 and the IC card 12 and gets the public values X and Y, the encryption key k (i.e., the encryption key k') is the confidential information known only to the PED 11 and the IC card 12. Transmission of a PIN and other data can be performed in a secure manner between the PED 11 and the IC card 12 by performing encrypted communication using the encryption key k (i.e., the encryption key k').

Furthermore, the PED 11 and the IC card 12 do not have to share the confidential information before performing encrypted communication.

In addition, in the PED 11, the private value generating unit 52 newly generates a random number and a private value x on the basis of the random number every time communication with the IC card 12 is started. Accordingly, the encryption key k generated using the private value x differs for each communication. Thus, transmission of information can be performed in a more secure manner.

As in the case of the PED 11, in the IC card 12, the private value generating unit 72 generates a random number and a private value y on the basis of the random number every time communication with the PED 11 is started. Accordingly, the encryption key k' generated using the private value y differs for each communication. Thus, transmission of information can be performed in a more secure manner as in the case of the PED 11.

Although a case in which the Diffie-Hellman key exchange algorithm is used as a key exchange algorithm has been described, the key exchange algorithm is not limited to this particular example. Other key exchange algorithms, such as ECDH (elliptic curve Diffie-Hellman), may be used.

Meanwhile, the PIN is not eavesdropped by a third party when the user directly operates a numeric keypad and a keyboard of the operation section 23 and inputs the PIN into the PED 11.

In addition, a so-called man-in-the-middle attack can be prevented by setting the IC card 12 belonging to the user in the trusted PED 11. In the man-in-the-middle attack, a third party intercepts the (electromagnetic wave) communication between the PED 11 and the IC card 12.

Additionally, the above-described series of processing steps can be executed by hardware or software. When the series of processing steps is executed by software, programs constituting the software may be installed, from a program recording medium, in a computer embedded in a dedicated hardware or, for example, a general-purpose personal computer capable of performing various functions by installing various programs.

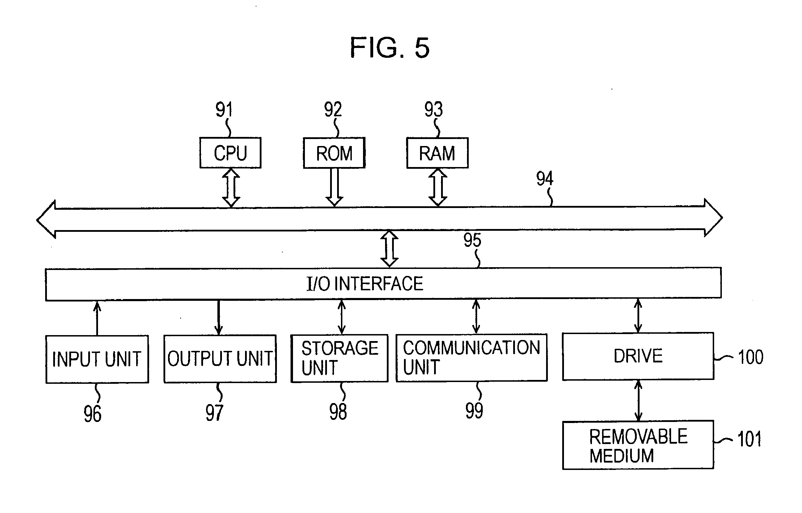

Fig. 5 is a block diagram showing an example of a configuration of a personal computer for executing the above-described series of processing steps using programs. A CPU (central processing unit) 91 executes various processing operations according to programs stored in a ROM (read only memory) 92 or a storage unit 98. A RAM (random access memory) 93 stores programs executed by the CPU 91 and data appropriately. These CPU 91, ROM 92, and RAM 93 are interconnected through a bus 94.

An input/output (I/O) interface 95 is also connected to the CPU 91 through the bus 94. An input unit 96, such as a keyboard, a mouse, and a microphone, and an output unit 97, such as a display and a speaker, are connected to the I/O interface 95. The CPU 91 performs various processing operations in response to instructions supplied from the input unit 96. The CPU 91 then outputs the processing results to the output unit 97.

The storage unit 98 connected to the I/O interface 95 may be constituted by, for example, a hard disk. The storage unit 98 stores programs executed by the CPU 91 and various data. A communication unit 99 communicates with external devices via a network, such as the Internet and a local area network.

In addition, programs may be obtained through the communication unit 99 and stored in the storage unit 98.

A drive 100 connected to the I/O interface 95 drives a removable medium 101, such as a magnetic disk, an optical disk, a magneto-optical disk, or a semiconductor memory, when the removable medium 101 is inserted into the drive 100, and obtains programs and data recorded on the removable medium 101. The obtained programs and data are transferred to and stored in the storage unit 98 if necessary.

As shown in Fig. 5, types of program recording medium having programs, which is installed in a computer and is executable by the computer, recorded thereon include the removable medium 101, the ROM 92 temporarily or permanently storing the programs, and the hard disk constituting the storage unit 98. As mentioned above, the removable medium 101 may be a package medium such as a magnetic disk (including a flexible disk), an optical disk (including a CD-ROM (Compact Disc-Read Only Memory) or a DVD (Digital Versatile Disc)), a magneto-optical disk, or a semiconductor memory. The programs may be stored on the program recording medium through the communication unit 99 using a communication medium with or without a cable if necessary. The communication unit 99 may be an interface such as a router and a modem. The communication medium may be a local area network, the Internet, or a digital satellite broadcasting.

Meanwhile, in this specification, the steps described in a program recorded on a program recording medium include processing that is executed sequentially in the described order, and also includes processing that is executed in parallel or individually, not necessarily sequentially.

In addition, in this specification, a system represents an entire apparatus constituted by a plurality of devices.
The embodiments of the present invention can be applied to communication devices other than PEDs and IC cards, such as, for example, mobile phones that have functions of IC cards and perform near field communication. Furthermore, the above-described encryption key exchange can be performed through a wire communication but not through the wireless communication.
It should be understood by those skilled in the art that various modifications, combinations, sub-combinations and alterations may occur depending on design requirements and other factors insofar as they are within the scope of the appended claims or the equivalents thereof.

**Claims**

1. A communication system comprising:

   a first communication device configured to perform wireless communication; and
   a second communication device configured to perform wireless communication, wherein the first communication device includes
   first private value generating means configured to generate a first private value to be kept secret from outside parties,
   first calculating means configured to perform a predetermined calculation using the first private value and two known preset values to determine a first public value to be transmitted to the second communication device, and
   first encryption key generating means configured to perform the predetermined calculation using the first private value, a second public value transmitted from the second communication device, and one of the two preset values to generate an encryption key for use in encrypted communication with the second communication device, and wherein the second communication device includes
   second private value generating means configured to generate a second private value to be kept secret from outside parties,
   second calculating means configured to perform the predetermined calculation using the second private value and the two preset values to determine the second public value to be transmitted to the first communication device, and
   second encryption key generating means configured to perform the predetermined calculation using the second private value, the first public value transmitted from the first communication device, and the one of the preset values to generate the encryption key for use in encrypted communication with the first communication device.

2. A communication device configured to perform wireless communication with another communication device, the communication device comprising:

   private value generating means configured to generate a first private value to be kept secret from outside parties;
   calculating means configured to perform a predetermined calculation using the first private value and two known preset values to determine a first public value to be transmitted to the other communication device; and
   encryption key generating means configured to perform the predetermined calculation using the first private value, a second public value transmitted from the other communication device, and one of the two preset values to generate an encryption key for use in encrypted communication with the other communication device, the second public value being determined by performing the predetermined calculation using a second private value to be kept secret from outside parties and the two preset values.

3. The communication device according to Claim 2, further comprising:

   PID storage means for storing a personal identifier;
   decrypting means configured to decrypt an encrypted personal identifier transmitted from the other communication device using the encryption key, the encrypted personal identifier being obtained by encrypting a personal identifier input by a user; and
   determination means configured to determine whether the personal identifier stored in the storage means and the personal identifier decrypted by the decrypting means agree, wherein
   the communication device continues the communication with the other communication device if the personal identifier stored in the storage means and the personal identifier decrypted by the decrypting means agree.

4. The communication device according to Claim 2, further comprising:

operation means for being operated at the time of input of a personal identifier; and
encrypting means configured to encrypt the personal identifier input through the operation of the operation means into an encrypted personal identifier using the encryption key, wherein
the communication device transmits the encrypted personal identifier to the other communication device.

5. A communication method for a communication device configured to perform wireless communication with another communication device, the method comprising the steps of:

generating a first private value to be kept secret from outside parties;
performing a predetermined calculation using the first private value and two known preset values to determine a first public value to be transmitted to the other communication device; and
performing the predetermined calculation using the first private value, a second public value transmitted from the other communication device, and one of the two preset values to generate an encryption key for use in encrypted communication with the other communication device, the second public value being determined by performing the predetermined calculation using a second private value to be kept secret from outside parties and the two preset values.

6. A program for causing a computer for controlling a communication device configured to perform wireless communication with another communication device to execute a process, the process comprising the steps of:

generating a first private value to be kept secret from outside parties;
performing a predetermined calculation using the first private value and two known preset values to determine a first public value to be transmitted to the other communication device; and
performing the predetermined calculation using the first private value, a second public value transmitted from the other communication device, and one of the two preset values to generate an encryption key for use in encrypted communication with the other communication device, the second public value being determined by performing the predetermined calculation using a second private value to be kept secret from outside parties and the two preset values.

7. A communication device configured to perform wireless communication with another communication device, the communication device comprising:

a private value generating unit configured to generate a first private value to be kept secret from outside parties;
a calculating unit configured to perform a predetermined calculation using the first private value and two known preset values to determine a first public value to be transmitted to the other communication device; and
an encryption key generating unit configured to perform the predetermined calculation using the first private value, a second public value transmitted from the other communication device, and one of the two preset values to generate an encryption key for use in encrypted communication with the other communication device, the second public value being determined by performing the predetermined calculation using a second private value to be kept secret from outside parties and the two preset values.

# FIG. 1

EP 1 845 653 A1

USER

PID

1

11
PED

WIRELESS
COMMUNICATION

12
IC CARD

THIRD PARTY

# FIG. 2

EP 1 845 653 A1

# FIG. 3

22

51
PRESET VALUE STORAGE UNIT (n, g)

54
n, g  PUBLIC VALUE CALCULATING UNIT  $X = g^x \bmod (n)$

52
PRIVATE VALUE GENERATING UNIT

53
x  PRIVATE VALUE STORAGE UNIT  x

55
n  ENCRYPTION KEY CALCULATING UNIT  x

$k = Y^x \bmod (n)$
$= g^{xy} \bmod (n)$

32

74
$Y = g^y \bmod (n)$  PUBLIC VALUE CALCULATING UNIT  n, g

71
PRESET VALUE STORAGE UNIT (n, g)

73
PRIVATE VALUE STORAGE UNIT  y

72
y  PRIVATE VALUE GENERATING UNIT

75
ENCRYPTION KEY CALCULATING UNIT  n  y

$k' = X^y \bmod (n)$
$= g^{xy} \bmod (n)$

EP 1 845 653 A1

# FIG. 4

START OF PROCESSING IN PED

READ OUT PRESET VALUES n AND g —S11

GENERATE PRIVATE VALUE x —S12

CALCULATE PUBLIC VALUE $X = g^x mod(n)$ —S13

TRANSMIT PUBLIC VALUE X TO IC CARD —S14

PUBLIC VALUE X

START OF PROCESSING IN IC CARD

RECEIVE PUBLIC VALUE X —S41

GENERATE PRIVATE VALUE y —S42

CALCULATE ENCRYPTION
KEY $k' = X^y mod(n) = g^{xy} mod(n)$ —S43

READ OUT PRESET VALUES n AND g —S44

CALCULATE PUBLIC VALUE $Y = g^y mod(n)$ —S45

TRANSMIT PUBLIC VALUE Y TO PED —S46

PUBLIC VALUE Y

RECEIVE PUBLIC VALUE Y —S15

CALCULATE ENCRYPTION KEY
$k = Y^x mod(n) = g^{xy} mod(n)$ —S16

REQUEST INPUT OF PIN —S17

DOES USER INPUT PIN? —S18    NO

YES

ENCRYPT PIN INTO ENCRYPTED
PIN USING ENCRYPTION KEY k —S19

TRANSMIT ENCRYPTED PIN TO IC CARD —S20

ENCRYPTED PIN

RECEIVE ENCRYPTED PIN —S47

DECRYPT ENCRYPTED PIN INTO
PIN USING ENCRYPTION KEY (k') —S48

DOES
PIN AND PRESET PIN
AGREE? —S49    NO

YES    S50

CONTINUE
COMMUNICATION

S51

TERMINATE
COMMUNICATION

RESULT NOTIFICATION

OUTPUT RESULT NOTIFICATION —S21

END

END

16

# FIG. 5

EP 1 845 653 A1

**European Patent Office**

## EUROPEAN SEARCH REPORT

Application Number

EP 07 00 7447

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINN-KE JAN ET AL: "A Secure Anonymous Voting by Employing Diffie-Hellman PKD Concept" SECURITY TECHNOLOGY, 1995. PROCEEDINGS. INSTITUTE OF ELECTRICAL AND ELECTRONICS ENGINEERS 29TH ANNUAL 1995 INTERNATIONAL CARNAHAN CONFERENCE ON SANDERSTEAD, UK 18-20 OCT. 1995, NEW YORK, NY, USA,IEEE, US, 18 October 1995 (1995-10-18), pages 252-258, XP010196423 ISBN: 0-7803-2627-X * abstract * * page 253, left-hand column, line 1 - right-hand column, line 11 * * figures 1-3 * ----- | 1-7 | INV. H04L9/08 G06K19/07 G07F7/10 |
| X | US 2005/058295 A1 (KANG SEONG-MIN [KR]) 17 March 2005 (2005-03-17) * paragraph [0003] * * paragraphs [0009] - [0011] * * paragraphs [0054] - [0080] * * figures 1-4,11-16 * ----- | 1-7 | |
| | | | TECHNICAL FIELDS SEARCHED (IPC) |
| A | JP 2005 295408 A (TEPCO UQUEST LTD) 20 October 2005 (2005-10-20) * abstract * ----- | 1-7 | H04L G06K G07F |

The present search report has been drawn up for all claims

| Place of search | Date of completion of the search | Examiner |
|---|---|---|
| Munich | 28 August 2007 | Bengi, Kemal |

EPO FORM 1503 03.82 (P04C01)

## ANNEX TO THE EUROPEAN SEARCH REPORT
## ON EUROPEAN PATENT APPLICATION NO.

EP 07 00 7447

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2007

| Patent document cited in search report | | Publication date | Patent family member(s) | Publication date |
|---|---|---|---|---|
| US 2005058295 | A1 | 17-03-2005 | KR 20050024677 A | 11-03-2005 |
| JP 2005295408 | A | 20-10-2005 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006109813 A
- JP 7075033 B